# DEMANDE DE BREVET EUROPEEN

(11) **EP 4 761 102 A1**
(43) Date de publication de la demande: **17.06.2026**
(21) Numéro de dépôt: 25221213.9
(22) Date de dépôt: 05.12.2025
(51) Int. Cl.: H02S 20/23, E04D 1/18, E04D 1/30, H02S 20/25

(54) **TUILE MÉTALLIQUE MANCHONNÉE**

(30) Priorité: 13.12.2024 FR 2414053
(71) Demandeur: Terreal, 92150 Suresnes (FR)
(72) Inventeur: ETIENNEY, Berille, 92150 SURESNES (FR); FABRE, Christophe, 92150 SURESNES (FR); MALE, Philippe, 92150 SURESNES (FR)
(74) Mandataire: Loyer & Abello

(57) **Abrégé**

L'invention concerne une tuile métallique 1 pour panneaux photovoltaïques comprend une surface interne 2 pour la toiture et une surface externe 3 avec : un pureau 4 plan pour l'eau de pluie, une portion d'emboitement supérieur 5 pour chevauchement longitudinal, une première et une deuxième portion d'emboitement latéral externe pour chevauchement transversal, un orifice 8 traversant entre les portions latérales, et un manchon 9 autour de l'orifice 8. La tuile présente également un premier, un deuxième et un troisième bord relevé pour diriger l'écoulement d'eau.

## Description

### Domaine technique

L'invention se rapporte au domaine du montage d'une installation photovoltaïque sur une charpente recouverte de tuiles.

L'invention concerne plus particulièrement une tuile métallique manchonnée permettant de monter une installation photovoltaïque sur une charpente recouverte de tuile, un dispositif de montage pour monter une installation photovoltaïque, et une construction de tuiles combinant des tuiles en terre cuite et à la tuile métallique manchonnée.

### Arrière-plan technologique

Il est connu du document EP3480942 un dispositif de montage pour monter une installation photovoltaïque sur une charpente recouverte de tuiles.

Le dispositif de montage comprend une tuile en terre cuite destinée à recouvrir la charpente et présentant un orifice de tuile, une douille fixée à l'intérieur de l'orifice de tuile, un organe d'ancrage destiné à ancrer l'installation photovoltaïque et passant à travers l'ouverture de la douille, un couvercle recouvrant l'ouverture de la douille afin de la protéger.

Néanmoins, ce type d'installation présente certains désavantages. La conception en deux parties assemblées l'une à l'autre présente des risques de défaut d'étanchéité. De plus, ce type de tuile en terre cuite n'est adapté qu'à un seul modèle de tuile sans pouvoir être adaptable à d'autres modèles existants.

### Résumé de l'invention

Le problème technique initial réside dans l'insuffisance des systèmes de montage à proposer des système proposant une étanchéité suffisante, une facilité de montage et une adaptabilité à divers modèles de tuile.

Ces insuffisances soulignent la nécessité d'une nouvelle conception d'un système de montage qui intègre des caractéristiques spécifiques pour améliorer l'étanchéité et faciliter la fixation des installations photovoltaïques, tout en s'intégrant harmonieusement dans les constructions de tuiles en terre cuite.

Selon un mode de réalisation, l'invention fournit une tuile métallique, notamment pour l'installation de panneau photovoltaïque, comprenant une surface interne destinée à être posée en regard d'une toiture et une surface externe opposée à la surface interne, la tuile métallique comportant au niveau de la surface externe:
- un pureau plan destiné à recevoir directement l'eau de pluie,
- une portion d'emboitement supérieur située dans le prolongement du pureau dans une direction longitudinale, la portion d'emboitement supérieur étant configurée pour être chevauchée par une tuile adjacente dans la direction longitudinale,
- une première portion d'emboitement latéral externe située au niveau d'une première bordure latérale du pureau, la première portion d'emboitement latéral externe étant configurée pour être chevauchée par une tuile adjacente dans une direction transversale, la direction transversale étant orthogonale à la direction longitudinale,
- une deuxième portion d'emboitement latéral externe située au niveau d'une deuxième bordure latérale du pureau opposée à la première bordure latérale, la deuxième portion d'emboitement latéral externe étant configurée pour être chevauchée par une tuile adjacente dans la direction transversale,
- un orifice traversant le pureau et situé entre la première portion d'emboitement latéral externe et la deuxième portion d'emboitement latéral externe,
- un manchon fixé au pureau, disposé tout autour de l'orifice et faisant saillie de la surface externe dans une direction d'épaisseur,

dans laquelle la tuile métallique comporte un premier bord relevé faisant saillie du pureau dans la direction d'épaisseur et s'étendant le long d'un bord de la première portion d'emboitement latéral externe, un deuxième bord relevé faisant saillie du pureau dans la direction d'épaisseur et s'étendant le long d'un bord de la deuxième portion d'emboitement latéral externe, et un troisième bord relevé faisant saillie du pureau et s'étendant le long d'un bord de la portion d'emboitement supérieur,
les premier, deuxième et troisième bord relevés étant configurées pour diriger l'écoulement d'eau.

La configuration des bords relevés permet une amélioration significative de l'étanchéité de la toiture, en empêchant l'eau de pluie de s'infiltrer sous la tuile, ce qui réduit le risque de dommages causés par l'eau à la structure de la toiture.

L'orifice traversant le pureau, associé au manchon faisant saillie, facilite l'installation de systèmes tels que des panneaux photovoltaïques, en permettant le passage sécurisé des câbles et organes d'ancrage à travers la tuile, tout en maintenant l'intégrité de l'étanchéité de la toiture.

La conception des portions d'emboitement latéral et supérieur assure une installation aisée et rapide des tuiles métalliques, en permettant un emboitement précis et solide entre les tuiles adjacentes, ce qui contribue à la robustesse globale du toit.

Le dispositif offre l'avantage d'une installation rapide et efficace grâce à sa conception optimisée, permettant un montage simplifié des panneaux photovoltaïques sur la toiture.

La tuile métallique permet une intégration harmonieuse avec des tuiles en terre cuite, notamment des tuiles romanes, offrant une esthétique préservée tout en améliorant la fonctionnalité de la toiture. De plus, elle s'adapte facilement à différents modèles de tuile en terre cuite.

Au sens de l'invention, le terme "surface interne" désigne une surface qui est en regard de la toiture.

Au sens de l'invention, le terme "surface externe" désigne une surface qui est en regard des panneaux photovoltaïques.

Le terme "pureau" désigne la partie de la tuile destinée à recevoir directement l'eau de pluie.

Selon des modes de réalisation, une telle tuile peut comporter une ou plusieurs des caractéristiques suivantes.

Selon un mode de réalisation, la tuile métallique comporte une saillie d'étanchéité disposée au niveau du troisième bord relevé, la saillie d'étanchéité présentant un bord arrondi complémentaire à un galbe interne d'une surface interne d'une tuile romane venant chevauchée la tuile métallique au niveau de la portion d'emboitement supérieur.

La présence de la saillie d'étanchéité au niveau du troisième bord relevé permet de créer une barrière supplémentaire contre l'eau, en épousant parfaitement la forme de la tuile romane et en réduisant ainsi les risques de fuites.

Selon un mode de réalisation, la tuile métallique comporte un dispositif de reprise de galbe fixé au pureau au niveau d'un bord inférieur de la tuile métallique, le dispositif de reprise de galbe étant situé entre la première portion d'emboitement latéral externe et la deuxième portion d'emboitement latéral externe dans la direction transversale et faisant saillie du pureau dans la direction d'épaisseur, une surface interne du dispositif de reprise de galbe comportant une paroi avec une découpe arrondie complémentaire à un galbe externe d'une surface externe d'une tuile romane étant chevauchée par le dispositif de reprise de galbe de la tuile métallique.

Le dispositif de reprise de galbe assure une transition en douceur entre la tuile métallique et la tuile romane, ce qui contribue à une meilleure répartition des charges et à une diminution des points de tension sur la toiture.

La forme arrondie du dispositif de reprise de galbe, complémentaire au galbe de la tuile romane, permet une intégration esthétique et fonctionnelle des tuiles métalliques avec des tuiles traditionnelles, ce qui est particulièrement avantageux pour les rénovations ou les installations sur des bâtiments historiques.

La forme complémentaire avec la tuile romane située en dessous permet de créer une barrière supplémentaire contre l'eau, en épousant parfaitement la forme de la tuile romane et en réduisant ainsi les risques de fuites.

Selon un mode de réalisation, le manchon métallique est soudé au pureau.

Selon un mode de réalisation, le manchon métallique est soudé par point au pureau, un cordon de mastic étant disposé au niveau de la liaison entre le manchon métallique et le pureau.

La soudure du manchon métallique au pureau, notamment par soudure par point, offre une fixation durable et résistante aux intempéries, ce qui garantit une longévité accrue de l'installation des panneaux photovoltaïques ou d'autres dispositifs.

L'utilisation d'un cordon de mastic au niveau de la liaison entre le manchon métallique et le pureau renforce l'étanchéité de l'ensemble, en prévenant les infiltrations d'eau qui pourraient compromettre la structure de la toiture ou les équipements installés.

Selon un mode de réalisation, la première portion d'emboitement latéral externe et/ou la deuxième portion d'emboitement latéral externe comporte une patte de fixation, la patte de fixation étant configurée pour être fixée à un liteau d'une toiture.

La présence de pattes de fixation sur les portions d'emboitement latéral externe permet une fixation directe et sécurisée des tuiles métalliques aux liteaux de la toiture, ce qui renforce la stabilité de l'ensemble du toit face aux charges telles que le vent ou la neige.

La facilité de fixation des tuiles métalliques grâce aux pattes de fixation réduit le temps d'installation et les coûts associés, tout en permettant une adaptation flexible aux différentes configurations de toiture.

Selon un mode de réalisation, la tuile métallique présente une première portion chanfreinée reliant la première portion d'emboitement latéral externe et un bord inférieur de la tuile métallique, la première portion chanfreinée présentant un premier bord de chanfrein faisant saillie du pureau dans la direction d'épaisseur et s'étendant le long d'un bord de la première portion chanfreinée,

Selon un mode de réalisation, la tuile métallique présente une deuxième portion chanfreinée reliant la deuxième portion d'emboitement latéral externe et le bord inférieur de la tuile métallique, la deuxième portion chanfreinée présentant un deuxième bord chanfrein faisant saillie du pureau dans la direction d'épaisseur et s'étendant le long d'un bord de la deuxième portion chanfreinée.

La conception des portions chanfreinées permet d'adapter la tuile métallique aux formes des tuiles avoisinantes.

Les bords de chanfrein faisant saillie contribuent à un emboîtement plus précis et sécurisé entre les tuiles adjacentes, réduisant ainsi le risque de déplacement dû à des forces externes et améliorant l'étanchéité globale de la toiture.

Selon un mode de réalisation, l'invention fournit aussi un dispositif de montage pour monter une installation photovoltaïque sur une charpente recouverte de tuile, le dispositif de montage comprenant:
- une tuile métallique précitée,
- un organe d'ancrage destiné à ancrer l'installation photovoltaïque sur la charpente, l'organe d'ancrage passant à travers de l'orifice de la tuile métallique et étant, d'une part, destiné à être fixé à la charpente et, d'autre part, destiné à être fixé à l'installation photovoltaïque.

L'intégration de l'organe d'ancrage à travers l'orifice de la tuile métallique permet une fixation solide et fiable de l'installation photovoltaïque, assurant la stabilité de l'installation.

La possibilité de fixer directement l'organe d'ancrage à la charpente à travers la tuile métallique simplifie le processus d'installation, réduisant le temps et les coûts associés à la mise en place de l'installation photovoltaïque.

Selon un mode de réalisation, l'invention fournit aussi une construction de tuiles, dans laquelle la construction de tuiles comprend au moins une rangé de tuiles en terre cuite alignées le long d'une direction transversale de toiture, une tuile métallique précitée étant interposée entre une première tuile en terre cuite de la rangée de tuiles et une deuxième tuile en terre cuite de la rangée de tuiles, une surface interne de la première tuile présentant une portion d'emboitement latéral interne venant chevaucher la première portion d'emboitement latéral externe de la tuile métallique, et une surface interne de la deuxième tuile présentant une portion d'emboitement latéral interne venant chevaucher la deuxième portion d'emboitement latéral externe de la tuile métallique.

L'interposition de la tuile métallique entre les tuiles en terre cuite permet une intégration harmonieuse de systèmes additionnels, tels que des panneaux solaires, sans perturber l'esthétique traditionnelle de la toiture.

La conception d'emboîtement entre les tuiles en terre cuite et la tuile métallique assure une continuité visuelle et fonctionnelle, préservant l'intégrité de la couverture et offrant une protection supplémentaire contre les infiltrations d'eau.

Selon un mode de réalisation, les tuiles en terre cuite sont des tuiles romanes.

L'utilisation de tuiles romanes, reconnues pour leur esthétique attrayante, permet de maintenir l'aspect traditionnel du toit tout en intégrant des fonctionnalités modernes grâce à la tuile métallique.

La compatibilité avec les tuiles romanes, qui sont couramment utilisées dans de nombreuses régions, facilite l'adoption de la tuile métallique dans des projets de rénovation ou de construction neuve, en offrant une solution adaptable à différents styles architecturaux.

Selon un mode de réalisation, la première tuile ou la deuxième tuile est une demi-tuile présentant deux portions d'emboitement latéral interne de part et d'autre de la demi-tuile.

L'utilisation d'une demi-tuile avec deux portions d'emboîtement latéral interne permet une flexibilité accrue dans la conception de la toiture, en facilitant l'intégration de la tuile métallique dans des configurations de toit complexes ou des zones nécessitant des ajustements précis.

La demi-tuile optimise l'utilisation des matériaux en réduisant les déchets, car elle peut être utilisée pour compléter les rangées de tuiles ou s'adapter à des espaces restreints, tout en maintenant une cohérence esthétique et fonctionnelle avec le reste de la toiture.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
La [Fig.1] représente une vue en perspective de la tuile métallique selon un mode de réalisation, côté surface externe.
La [Fig.2] représente une vue en perspective de la tuile métallique selon un mode de réalisation, côté surface interne.
La [Fig.3] est une vue de dessus d'une construction de tuiles munie d'une tuile métallique selon un mode de réalisation.
La [Fig.4] est une vue en perspective d'une construction de tuiles munie d'une tuile métallique selon un mode de réalisation, certaines tuiles en terre cuite adjacentes ayant été omises.
La [Fig.5] est une vue en coupe de la [Fig.3] selon le plan de coupe V-V, représentant la partie supérieure d'une tuile métallique selon un mode de réalisation emboitée avec les tuiles adjacentes.

### Description des modes de réalisation

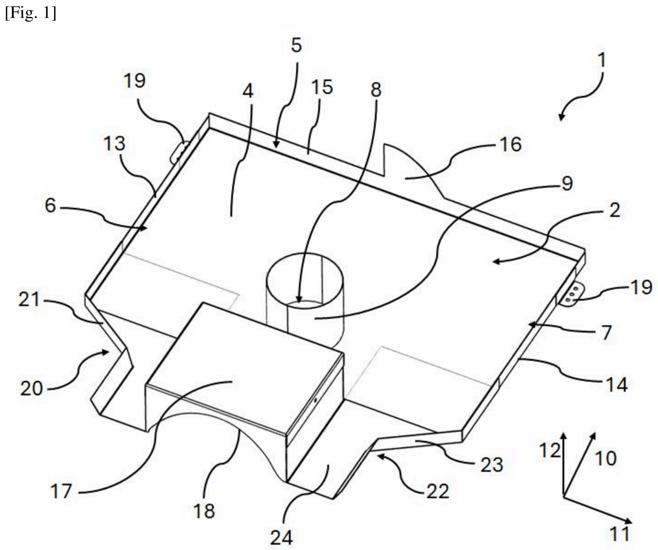

L'invention concerne un dispositif de couverture, spécifiquement une tuile métallique 1 et une construction de tuiles associée qui seront décrites au travers des figures 1 à 5. La tuile métallique 1 permet de fixer des panneaux photovoltaïques au travers d'une toiture en nécessitant uniquement des modifications mineures de la construction de tuiles.

Ce dispositif intègre plusieurs caractéristiques innovantes qui améliorent la performance d'étanchéité par rapport aux solutions existantes, notamment les tuiles à douille en terre cuite. La conception de la tuile métallique 1 permet une adaptation facile à divers modèles de tuiles en terre cuite, tout en garantissant une installation simplifiée et efficace.

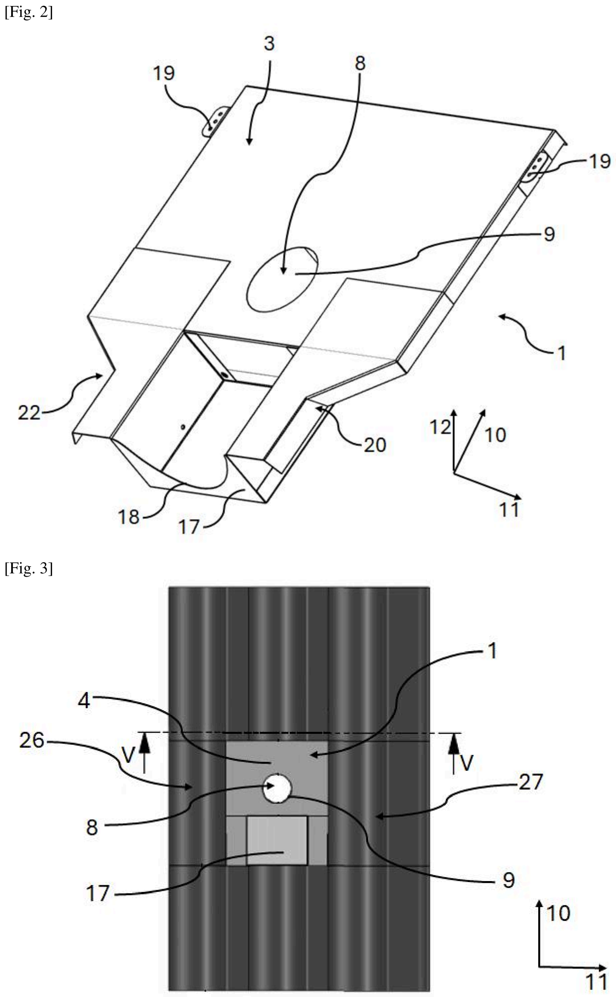

Les figures 1 et 2 représentent isolément une tuile métallique 1 selon un mode de réalisation.

Ces figures montrent une tuile métallique 1 conçue pour l'installation de panneaux photovoltaïques, illustrant ses différentes parties structurelles et fonctionnelles. La [Fig.1] présente plus particulièrement la surface externe 3 de la tuile métallique 1 qui est orientée vers l'extérieur tandis que la [Fig.2] présente la surface interne 2 qui est orientée vers la charpente.

Le pureau 4 est visible au centre, avec la portion d'emboîtement supérieur 5 en son prolongement dans la direction longitudinale 10. La première portion d'emboitement latéral externe 6 et la deuxième portion d'emboitement latéral externe 7 sont situées dans le prolongement des bords latéraux du pureau 4. Un orifice 8 est percé à travers le pureau 4, entouré par un manchon 9 qui dépasse dans la direction d'épaisseur 12.

La tuile métallique 1 comporte également :
- un premier bord relevé 13 faisant saillie du pureau 4 dans la direction d'épaisseur 12 et s'étendant le long d'un bord de la première portion d'emboitement latéral externe 6,
- un deuxième bord relevé 14 s'étendant le long d'un bord de la deuxième portion d'emboitement latéral externe 7, et
- un troisième bord relevé 15 s'étendant le long d'un bord de la portion d'emboitement supérieur 5.

Les bords relevés 13-15 longent ces portions pour diriger l'écoulement d'eau.

La [Fig.1] met également en évidence un dispositif de reprise de galbe 17 situé au niveau d'un bord inférieur 24 de la tuile métallique 1. Le dispositif de reprise de galbe 17 est ainsi situé entre la première portion d'emboitement latéral externe 6 et la deuxième portion d'emboitement latéral externe 7 dans la direction transversale 11 et fait saillie du pureau 4 dans la direction d'épaisseur 12. Le dispositif de reprise de galbe 17 comporte une paroi munie d'une découpe arrondie 18 complémentaire à un galbe externe 29 d'une surface externe 3 d'une tuile inférieure romane étant chevauchée par le dispositif de reprise de galbe 17 de la tuile métallique 1.

Dans le mode de réalisation illustré en figures 1 à 4, le dispositif de reprise de galbe 17 présente la forme d'une boite polyédrique comportant une pluralité de parois dont celle présentant la découpe arrondie 18. Néanmoins, d'autres formes pourraient être envisagées, comme par exemple un demi-cylindre couché ou une hémisphère. De plus, dans le cas d'un polyèdre, certains sommets peuvent être chanfreinés afin de faciliter certaines opérations de montage et de cablage.

De plus, de manière avantageuse et comme visible en [Fig.1], la tuile métallique 1 peut présenter une première portion chanfreinée 20 reliant la première portion d'emboitement latéral externe 6 et un bord inférieur 24 de la tuile métallique 1. La première portion chanfreinée 20 présente ainsi un premier bord de chanfrein 21 faisant saillie du pureau 4 dans la direction d'épaisseur 12 et s'étendant le long d'un bord de la première portion chanfreinée 20 de sorte à former une barrière continue avec le premier bord relevé 13.

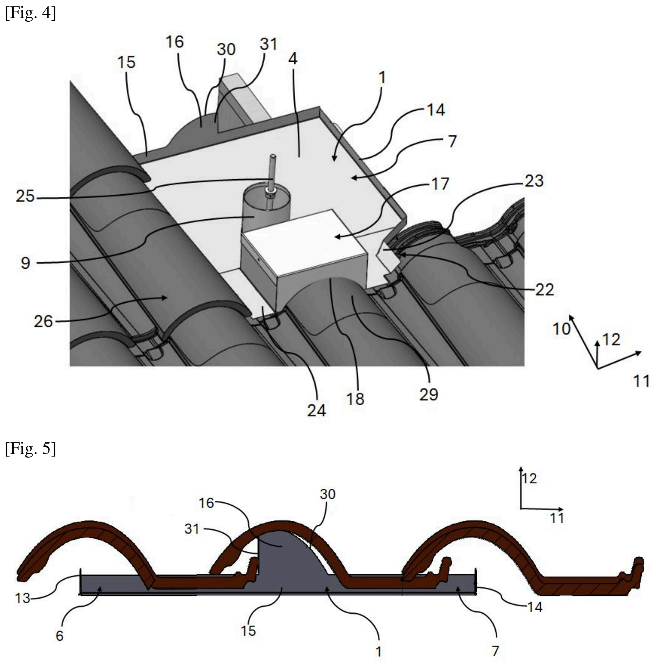

De manière analogue, la tuile métallique 1 peut présenter une deuxième portion chanfreinée 22 reliant la deuxième portion d'emboitement latéral externe 7 et le bord inférieur 24 de la tuile métallique 1. La deuxième portion chanfreinée 22 présente ainsi un deuxième bord de chanfrein 23 faisant saillie du pureau 4 dans la direction d'épaisseur 12 et s'étendant le long d'un bord de la deuxième portion chanfreinée 22 de sorte à former une barrière continue avec le deuxième bord relevé 14. L'utilité d'un telle deuxième portion chanfreinée 22 est notamment visible en [Fig.4]. En effet, la deuxième portion chanfreinée 22 permet ainsi de contourner un galbe externe 29 d'une tuile inférieure et donc à la tuile métallique 1 de se conformer aux tuiles en terre cuite déjà mises en place.

Dans le mode de réalisation représenté en figures 1 et 2, la première portion d'emboitement latéral externe 6 et la deuxième portion d'emboitement latéral externe 7 comporte une patte de fixation 19. La patte de fixation 19 permet de fixer facilement la tuile métallique 1 à un liteau de la charpente.

La [Fig.5] permet d'illustrer notamment l'emboitement avec la portion d'emboitement supérieur 5 et la tuile supérieure en terre cuite. La tuile métallique 1 comporte une saillie d'étanchéité 16 disposée au niveau du troisième bord relevé 15, comme représenté notamment en [Fig.1].

La saillie d'étanchéité 16 présente de manière avantageuse un bord arrondi 30 complémentaire à un galbe interne 28 d'une surface interne 2 d'une tuile supérieure romane venant chevauchée la tuile métallique 1 au niveau de la portion d'emboitement supérieur 5, comme représenté en [Fig.5]. La saillie d'étanchéité 16 présente également un bord plat 31 venant en butée contre une portion d'emboitement latéral d'une tuile supérieure.

Dans le mode de réalisation particulier illustré notamment sur ces figures, la tuile métallique 1 à manchon 9 présente ainsi plusieurs éléments :
- des bords relevés 13-15 sur tout le pourtour, ce qui crée une barrière physique contre l'infiltration d'eau. Cette conception permet de canaliser l'eau de pluie vers le bord inférieur 24 puis les zones de drainage appropriées de la toiture, minimisant ainsi le risque de fuites,
- un dispositif de reprise de galbe 17 qui est conçu pour épouser la forme des tuiles inférieures, permettant un emboîtement parfait,
- un manchon 9 métallique qui est préférentiellement soudé par point au pureau 4, permettant le passage d'un kit de traversée pour systèmes solaires, et notamment un organe d'ancrage 25, visible en [Fig.4]. Ce manchon 9 est conçu avec une hauteur suffisante pour garantir l'étanchéité, et un complément d'étanchéité est appliqué autour du manchon 9 à l'aide d'un mastic, renforçant ainsi la protection contre les infiltrations,

- des pattes de fixation 19 équipées de pré-trou de clouage, facilitant son accroche au liteau si nécessaire. Cela permet une installation rapide et sécurisée, tout en maintenant la tuile en place face aux intempéries,
- des portions chanfreinées 20, 22 pour permettre un emboîtement optimal avec les tuiles inférieures, suivant la forme spécifique de la tuile. Cela assure une continuité dans la couverture et contribue à l'esthétique de l'ensemble,
- une saillie d'étanchéité 16 qui est prévue pour reprendre le galbe interne 28 de la tuile supérieure garantissant ainsi une étanchéité renforcée entre les différentes couches de tuiles.

Comme représenté en [Fig.3], la tuile métallique 1 est disposée dans la direction transversale 11 entre une première tuile 26 en terre cuite et une deuxième tuile 27 en terre cuite. Dans l'exemple représenté, la première tuile 26 est une tuile romane classique tandis que pour se conformer à la forme de la tuile métallique 1, la deuxième tuile 27 est une demi-tuile galbée qui présente deux portions d'emboitement latéral interne de part et d'autre de la demi-tuile de sorte que la deuxième tuile 27 vient chevaucher d'une part la tuile métallique 1 et d'autre part la tuile en terre cuite qui lui est adjacente.

Les figures 1, 2, 3 et 5 ont été illustrées avec une tuile métallique 1 et des tuiles en terre cuite avec un assemblage de gauche à droite, les tuiles étant montés rangée par rangée en commençant par la gauche. La [Fig.4] montre quant à elle un assemblage de droite à gauche. Le bord plat 31 et le bord arrondi 30 sont alors inversés. De plus, dans le cas d'un assemblage de droite à gauche, la demi-tuile est située à gauche de la tuile métallique 1 tandis que dans un assemblage de gauche à droite, la demi-tuile est située à droite de la tuile métallique 1

La tuile métallique 1 à manchon 9 peut être fabriquée à partir de divers matériaux métalliques, tels que l'acier galvanisé ou l'aluminium, offrant ainsi une résistance accrue aux conditions climatiques. Les dimensions de la tuile peuvent être adaptées en fonction des spécifications du projet et des tuiles en terre cuite utilisées, permettant une personnalisation selon les besoins des utilisateurs.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Construction de tuiles, dans laquelle la construction de tuiles comprend au moins une rangé de tuiles en terre cuite alignées le long d'une direction transversale (11) de toiture, une tuile métallique (1) étant interposée entre une première tuile (26) en terre cuite de la rangée de tuiles et une deuxième tuile (27) en terre cuite de la rangée de tuiles, la tuile métallique (1), notamment pour l'installation de panneau photovoltaïque, comprenant une surface interne (2) destinée à être posée en regard d'une toiture et une surface externe (3) opposée à la surface interne (2), la tuile métallique (1) comportant au niveau de la surface externe (3):
- un pureau (4) plan destiné à recevoir directement l'eau de pluie,
- une portion d'emboitement supérieur (5) située dans le prolongement du pureau (4) dans une direction longitudinale (10), la portion d'emboitement supérieur (5) étant configurée pour être chevauchée par une tuile adjacente dans la direction longitudinale (10),
- une première portion d'emboitement latéral externe (6) située au niveau d'une première bordure latérale du pureau (4), la première portion d'emboitement latéral externe (6) étant configurée pour être chevauchée par une tuile adjacente dans une direction transversale (11), la direction transversale (11) étant orthogonale à la direction longitudinale (10),
- une deuxième portion d'emboitement latéral externe (7) située au niveau d'une deuxième bordure latérale du pureau (4) opposée à la première bordure latérale, la deuxième portion d'emboitement latéral externe étant configurée pour être chevauchée par une tuile adjacente dans la direction transversale (11),
- un orifice (8) traversant le pureau (4) et situé entre la première portion d'emboitement latéral externe (6) et la deuxième portion d'emboitement latéral externe (7),
- un manchon (9) fixé au pureau (4), disposé tout autour de l'orifice (8) et faisant saillie de la surface externe (3) dans une direction d'épaisseur (12),
dans laquelle la tuile métallique (1) comporte un premier bord relevé (13) faisant saillie du pureau (4) dans la direction d'épaisseur (12) et s'étendant le long d'un bord de la première portion d'emboitement latéral externe (6), un deuxième bord relevé (14) faisant saillie du pureau (4) dans la direction d'épaisseur (12) et s'étendant le long d'un bord de la deuxième portion d'emboitement latéral externe, et un troisième bord relevé (15) faisant saillie du pureau (4) et s'étendant le long d'un bord de la portion d'emboitement supérieur (5), les premier, deuxième et troisième bords relevés (13, 14, 15) étant configurées pour diriger l'écoulement d'eau,
dans laquelle une surface interne (2) de la première tuile (26) présente une portion d'emboitement latéral interne venant chevaucher la première portion d'emboitement latéral externe (6) de la tuile métallique (1), et une surface interne (2) de la deuxième tuile (27) présentant une portion d'emboitement latéral interne venant chevaucher la deuxième portion d'emboitement latéral externe de la tuile métallique (1).

2. Construction de tuiles selon la revendication 1, dans laquelle la tuile métallique (1) comporte une saillie d'étanchéité (16) disposée au niveau du troisième bord relevé (15), la saillie d'étanchéité (16) présentant un bord arrondi (30) complémentaire à un galbe interne (28) d'une surface interne (2) d'une tuile romane venant chevauchée la tuile métallique (1) au niveau de la portion d'emboitement supérieur (5).

3. Construction de tuiles selon la revendication 1 ou la revendication 2, dans laquelle la tuile métallique (1) comporte un dispositif de reprise de galbe (17) fixé au pureau (4) au niveau d'un bord inférieur (24) de la tuile métallique (1), le dispositif de reprise de galbe (17) étant situé entre la première portion d'emboitement latéral externe (6) et la deuxième portion d'emboitement latéral externe dans la direction transversale (11) et faisant saillie du pureau (4) dans la direction d'épaisseur (12), le dispositif de reprise de galbe (17) comportant une paroi avec une découpe arrondie (18) complémentaire à un galbe externe (29) d'une surface externe (3) d'une tuile romane étant chevauchée par le dispositif de reprise de galbe (17) de la tuile métallique (1).

4. Construction de tuiles selon l'une des revendications 1 à 3, dans laquelle le manchon (9) métallique est soudé par point au pureau (4), un cordon de mastic étant disposé au niveau de la liaison entre le manchon (9) métallique et le pureau (4).

5. Construction de tuiles selon l'une des revendications 1 à 4, dans laquelle la première portion d'emboitement latéral externe (6) et/ou la deuxième portion d'emboitement latéral externe comporte une patte de fixation (19), la patte de fixation (19) étant configurée pour être fixée à un liteau d'une toiture.

6. Construction de tuiles selon l'une des revendications 1 à 5, dans laquelle la tuile métallique (1) présente une première portion chanfreinée (20) reliant la première portion d'emboitement latéral externe (6) et un bord inférieur (24) de la tuile métallique (1), la première portion chanfreinée (20) présentant un premier bord de chanfrein (21) faisant saillie du pureau (4) dans la direction d'épaisseur (12) et s'étendant le long d'un bord de la première portion chanfreinée (20), et dans laquelle la tuile métallique (1) présente une deuxième portion chanfreinée (22) reliant la deuxième portion d'emboitement latéral externe (7) et le bord inférieur (24) de la tuile métallique (1), la deuxième portion chanfreinée (22) présentant un deuxième bord de chanfrein (23) faisant saillie du pureau (4) dans la direction d'épaisseur (12) et s'étendant le long d'un bord de la deuxième portion chanfreinée (22).

7. Construction de tuiles selon l'une des revendications 1 à 6, dans laquelle les tuiles en terre cuite sont des tuiles romanes.

8. Construction de tuiles selon l'une des revendications 1 à 7, dans laquelle la première tuile (26) ou la deuxième tuile (27) est une demi-tuile présentant deux portions d'emboitement latéral interne de part et d'autre de la demi-tuile.
